# FASCICULE DE BREVET EUROPEEN

(11) **EP 0 852 194 B1**
(45) Date de publication et mention de la délivrance du brevet: **27.02.2002**
(21) Numéro de dépôt: 97121209.7
(22) Date de dépôt: 03.12.1997
(51) Int. Cl.: B60R 25/02

(54) **Antivol à engrenage pour une colonne de direction de véhicule automobile**
Diebstahlvorrichtung mit Getriebe für eine Fahrzeuglenksäule
Antitheft device with gears for a vehicle steering column

(30) Priorité: 05.12.1996 FR 9615066; 29.07.1997 FR 9709840
(43) Date de publication de la demande: 08.07.1998
(73) Titulaire: VALEO SECURITE HABITACLE, 94000 Créteil (FR)
(72) Inventeur: Garnault, Joel, 95110 Sannois (FR); Boulay, Jean-Claude, 94000 Creteil (FR)
(74) Mandataire: Croonenbroek, Thomas

(56) Documents cités:
- EP-A- 0 623 495
- FR-A- 587 057
- GB-A- 337 444
- GB-A- 339 940
- US-A- 1 360 616
- US-A- 1 512 072
- PATENT ABSTRACTS OF JAPAN vol. 096, no. 012, 26 décembre 1996 & JP 08 198057 A (KOYO SEIKO CO LTD), 6 août 1996,

## Description

L'invention concerne un antivol à engrenage pour une colonne de direction de véhicule automobile.

Les antivols connus utilisent géneralement (voir US-A-1360616 et US-A-1512072), pour bloquer toute rotation de l'arbre de la colonne de direction, un pêne escamotable qui est solidaire d'un élément de structure du véhicule et qui, lorsque l'antivol est enclenché, est emboîté dans une gâche aménagée dans l'arbre de la colonne de direction pour immobiliser celle-ci en rotation autour de son axe.

Un tel dispositif, pourtant largement utilisé, présente un certain nombre d'inconvénients.

Tout d'abord, lorsque le conducteur enclenche le système de verrouillage, celui-ci n'est pas réalisé automatiquement. En effet, l'antivol n'est véritablement actif que lorsque le pêne est engagé dans la gâche, ce qui n'est possible que si la gâche, et donc la colonne de direction, occupe une position particulière en vis-à-vis du pêne. Bien entendu, il a été proposé de munir la colonne de direction d'une série de gâches réparties angulairement de manière régulière mais il reste la plupart du temps obligatoire pour le conducteur de manoeuvrer le volant après avoir enclenché l'antivol pour mettre en correspondance une gâche de la colonne avec le pêne et provoquer une mise en action effective de l'antivol.

Cette mise en action effective se détecte généralement par un claquement qui correspond à l'arrivée en butée du pêne en position verrouillée effective. La colonne de direction et le volant ne disposent alors plus que d'un débattement angulaire limité.

Par ailleurs, une telle conception d'un antivol de colonne de direction oblige le conducteur à agir sur le volant au moment du déverrouillage pour permettre au pêne d'être dégagé de la gâche. En effet, les forces de friction du pêne contre les parois latérales de la gâche peuvent empêcher le retrait du pêne et il est nécessaire d'utiliser un débattement angulaire du pêne dans la gâche pour pouvoir libérer le pêne en supprimant le contact avec les parois de la gâche.

Par ailleurs, il est courant que, lors d'une tentative d'effraction, il soit appliqué un couple très élevé sur la colonne de direction, par l'intermédiaire du volant, pour tenter de rompre le pêne ou l'un de ses éléments de commande.

Si le pêne et son mécanisme de commande résistent à de tels efforts, le cambrioleur tentera d'augmenter l'effort appliqué à la colonne, ce qui peut conduire à la dégradation des autres éléments de la direction tels que le volant ou même le support de l'arbre de la colonne.

Au contraire, si le pêne et son mécanisme cèdent, il peut devenir possible de conduire le véhicule. Toutefois la rupture d'une des pièces du mécanisme pose de graves problèmes pour sa fiabilité de fonctionnement car il se peut que se produisent alors des blocages intempestifs de la colonne de direction en cours de roulage du véhicule.

Afin d'apporter une solution à ces différents problèmes, l'invention propose une nouvelle conception pour un antivol de colonne de direction, caractérisé en ce que la colonne comporte une roue d'engrenage qui est solidaire d'un arbre de la colonne en rotation autour de leur axe commun, en ce que l'antivol comporte un pignon, d'axe parallèle à l'axe de la colonne et de la roue, qui est monté à rotation sur un support mobile susceptible de se déplacer entre une position dégagée du pignon et une position engagée du pignon dans laquelle ce dernier engrène avec la roue de la colonne, et en ce qu'il est prévu des moyens d'immobilisation du pignon en rotation autour de son axe par rapport au support pour bloquer l'arbre de la colonne en rotation autour de son axe lorsque le pignon est en position engrenée.

Selon d'autres caractéristiques de l'invention :
- l'antivol comporte des moyens pour sa mise en oeuvre qui déplacent- le pignon de sa position dégagée à sa position engrenée, puis immobilisent le pignon en rotation.
- la trajectoire du pignon entre ses positions dégagée et engrenée est sensiblement parallèle à une tangente à la roue de la colonne de telle sorte que le pignon arrive en position engrenée en pivotant autour de son axe du fait de l'arrivée en contact de dents appartenant au pignon et à la roue ;
- le support du pignon coulisse selon une direction rectiligne parallèle à la tangente commune à la roue et au pignon ;
- le support de pignon pivote autour d'un axe parallèle à l'axe de la colonne et à l'axe du pignon ;
- les dents du pignon et de la roue comportent une tête de dent arrondie pour provoquer un ripage des dents l'une contre l'autre lorsque deux dents du pignon et de la roue arrivent l'une contre l'autre lors de l'engrènement du pignon ;
- les moyens d'immobilisation en rotation du pignon comportent des moyens de limitation du couple de blocage du mouvement de rotation du pignon ;
- les moyens d'immobilisation du pignon comportent un dispositif à friction dont au moins un élément est relié en rotation au pignon et dont l'autre élément est lié en rotation avec le support du pignon ;
- le pignon est monté à rotation sur un arbre solidaire du support, les moyens d'immobilisation comportent un embrayage à friction comportant au moins un disque fixe lié en rotation à l'arbre et au support, et au moins un disque mobile lié en rotation à une cage cylindrique qui est solidaire en rotation du pignon et dans laquelle sont agencés les disques, et certains au moins des disques sont mobiles axialement pour pouvoir être serrés axialement les uns contre les autres.
- l'embrayage à friction comporte plusieurs disques fixes liés à l'arbre, en ce que chaque disque fixe est agencé axialement entre deux disques mobiles liés au pignon ;
- un élément déformable élastiquement selon la direction axiale est interposé entre deux disques mobiles consécutifs ; et
- les moyens d'immobilisation en rotation du pignon sont commandés par un dispositif à came.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en coupe transversale d'un antivol de colonne de direction conforme aux enseignements de l'invention ;
- la figure 2 est une vue schématique en perspective illustrant un exemple de réalisation du support de pignon de l'antivol de la figure 1 ;
- les figures 3 à 5 sont des vues schématiques illustrant le principe de fonctionnement de l'antivol selon l'invention
- les figures 6 à 9 sont des vues schématiques illustrant de manière plus précise les positions relatives du pignon et de la roue dentée de l'antivol selon l'invention, représentés respectivement en position dégagée du pignon, en position engagée du pignon, en situation d'engagement dent face à dent du pignon avec la roue, et en position intermédiaire d'engagement suite au ripage de deux dents l'une contre l'autre ;
- les figures 10 et 11 illustrent en coupe axiale un mode de réalisation des moyens d'immobilisation du pignon en rotation, respectivement en position de libre rotation du pignon et en position verrouillée de celui-ci ;
- la figure 12 est une vue similaire à celle de la figure 1 illustrant un second mode de réalisation de l'invention dans lequel le support du pignon pivote, autour d'un axe parallèle à l'axe de la colonne, entre, respectivement, une position dégagée et une position engrenée du pignon ; et
- la figure 13 est une vue schématique partielle en perspective du second mode de réalisation de l'invention.

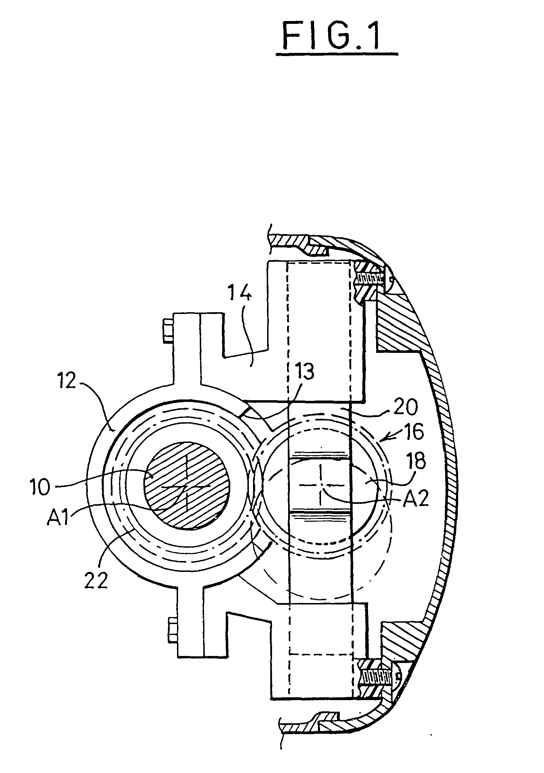

On a représenté sur la figure 1 une colonne de direction 10 de véhicule automobile comportant un arbre qui est montée à rotation autour de son axe A1 dans un tube de guidage 12 solidaire d'un support de colonne 14.

Conformément aux enseignements de l'invention, il est prévu un mécanisme d'antivol 16 qui comporte un pignon 18 d'axe A2 parallèle à l'axe A1 de la colonne 10, et qui est monté à rotation sur un support coulissant ou coulisseau 20 pour coopérer avec une roue dentée 22 solidaire en rotation de l'arbre de la colonne 10.

Comme on peut le voir sur les figures 1 à 5, le coulisseau 20 provoque le déplacement du pignon 18 selon une direction parallèle à la tangente commune au pignon 18 et à la roue 22 lorsqu'ils engrènent l'un avec l'autre. Le pignon 18 est ainsi susceptible de se déplacer entre une position dégagée dans laquelle il ne coopère pas avec la roue 22 et qui correspond à un état déverrouillé de l'antivol, et une position engagée dans laquelle il engrène avec la roue 22 et qui correspond, lorsque le pignon 18 est immobilisé en rotation autour de son axe A2, à un état verrouillé de l'antivol.

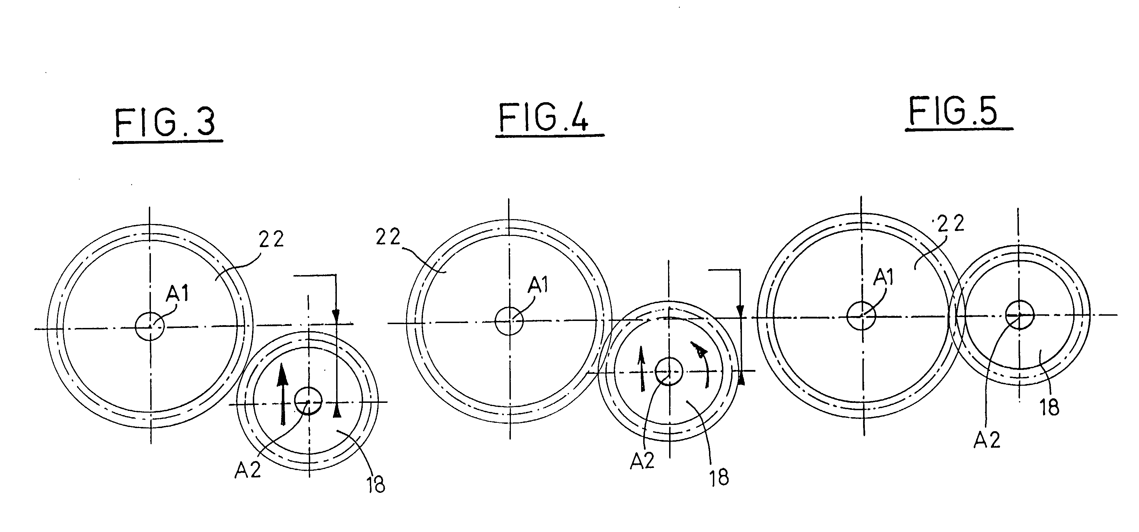

Les différentes étapes de la mise en action de l'antivol seront maintenant décrites en référence aux figures 3 à 9.

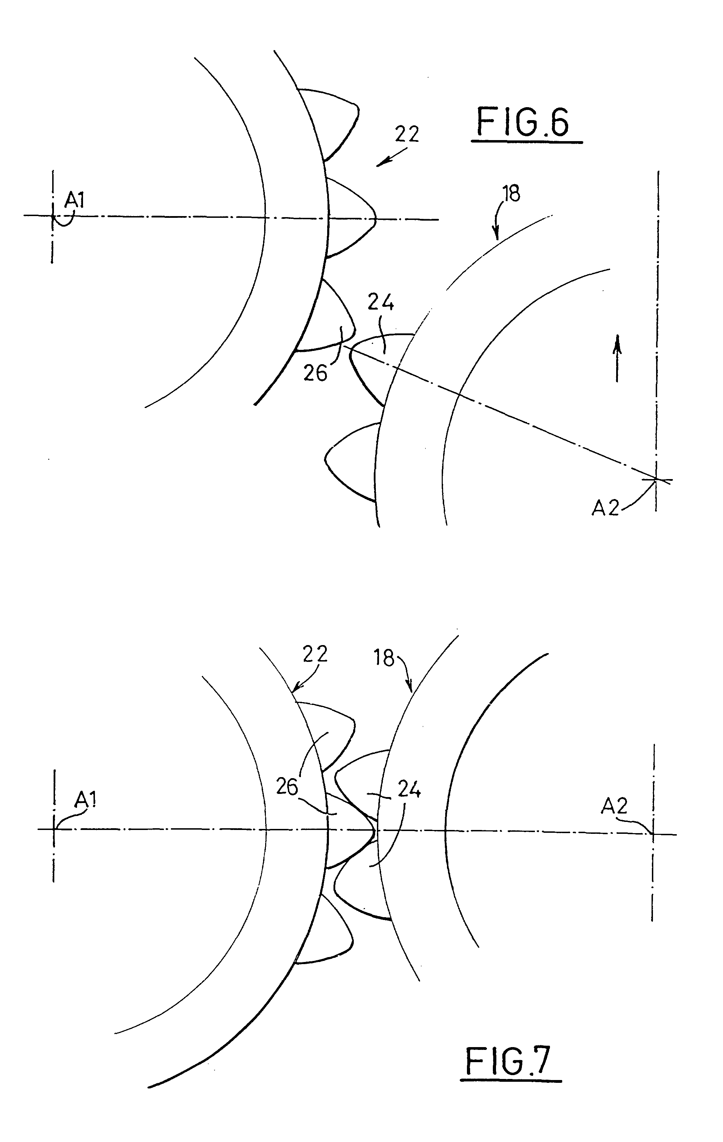

Lorsque l'antivol est dans son état déverrouillé représenté aux figures 3 et 6, le pignon 18 et la roue 22 sont libres de tourner l'un par rapport à l'autre si bien que le conducteur peut agir sur la colonne de direction 10 pour provoquer un braquage des roues directrices du véhicule.

Lorsque l'antivol 10 est commandé vers son état verrouillé, le pignon 18 est déplacé selon la direction tangente à la roue définie plus haut de telle sorte que les dents 24, 26 du pignon 18 et de la roue 22 coopèrent par engrènement. Durant tout le déplacement du pignon 18 entre sa position dégagée représentée à la figure 3 et sa position engrenée représentée à la figure 5, le pignon 18 est libre en rotation autour de son axe par rapport au support 20.

Les moyens d'actionnement (non représentés) du support 20 du pignon 18 peuvent être quelconques et peuvent par exemple être du type à crémaillère, ou comporter un mécanisme à roue et vis sans fin dans lequel la roue est immobilisée en rotation autour de son axe pour se déplacer en translation en fonction de la rotation de la vis.

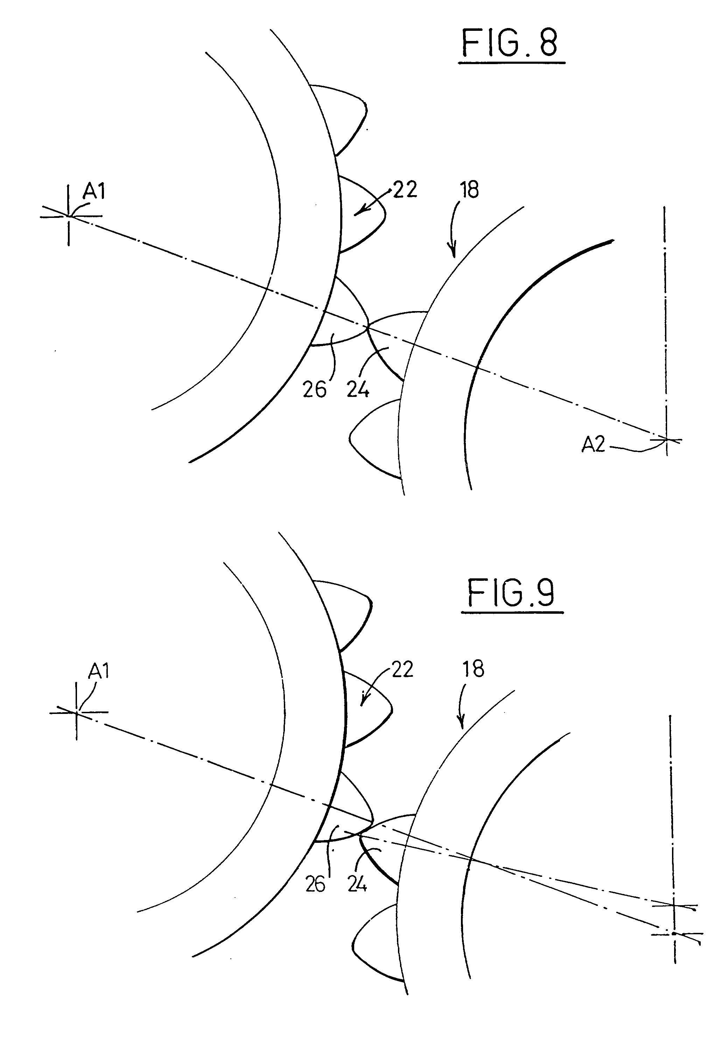

On a représenté sur la figure 8 le cas défavorable dans lequel le pignon 18 et la roue 22 se présentent dans une position angulaire telle que deux dents 24, 26, respectivement du pignon 18 et de la roue 22, arrivent l'une contre l'autre "dent face à dent" lors de l'arrivée en contact du pignon 18 et de la roue 22. Dans ce cas, les rayons du pignon 18 et de la roue 22 passant par le sommet de ces deux dents 24, 26 sont alignés de sorte que, en théorie, il pourrait se produire un blocage s'opposant à toute poursuite du mouvement de translation du coulisseau 20 et du pignon 18.

Pour éviter un tel risque, les dents 24, 26 sont taillées avec un déport positif de manière à présenter une faible épaisseur de tête selon la direction tangentielle et, de plus, elles présentent un arrondi de telle manière que, lorsque la pression de contact entre les deux dents augmente du fait du déplacement du pignon 18 selon la direction tangente, la dent 24 du pignon 18 tend à riper sur celle 26 de la roue dentée 22 par simple rotation du pignon 18 autour de son axe A2, ainsi que cela est représenté à la figure 9.

On évite ainsi toute situation de blocage et le coulisseau 20 peut continuer d'entraîner le pignon 20 vers sa position d'engrènement, la coopération des dentures du pignon 18 et de la roue 22 provoquant alors la rotation du pignon 18, dans le sens anti-horaire dans la configuration représentée sur les figures.

Lorsque le pignon est dans sa position engrenée qui est représentée sur les figures 5 et 7 et dans laquelle la distance entre les axes A1 et A2 de la roue 22 et du pignon 18 est minimale, des moyens d'immobilisation sont mis en oeuvre pour s'opposer à toute rotation du pignon 18 autour de son axe A2. De la sorte, la roue 22 et l'arbre de la colonne de direction 10 se retrouvent immobilisées en rotation, ce qui réalise l'état verrouillé de l'antivol.

Selon un autre aspect de l'invention, les moyens d'immobilisation peuvent être mis en oeuvre quelle que soit la position angulaire du pignon 18 et ils permettent de limiter le couple de blocage appliqué sur la colonne.

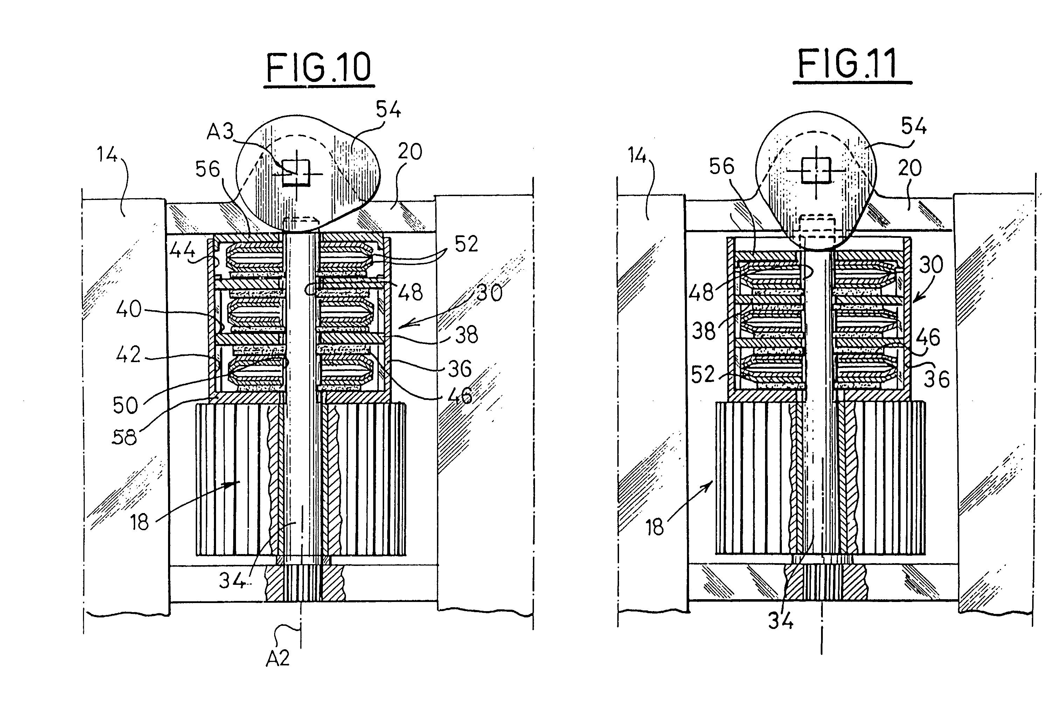

Les moyens d'immobilisation en rotation du pignon 18 sont représentés aux figures 10 et 11 et comportent essentiellement un embrayage multidisques 30 qui est agencé coaxialement au pignon 18 et qui est commandé par une came 54.

Dans l'exemple de réalisation représenté sur les figures 10 et 11, le pignon 18 est monté libre à rotation sur un arbre de guidage 34 d'axe A2, tandis que l'arbre 34 est solidaire en rotation du support 20.

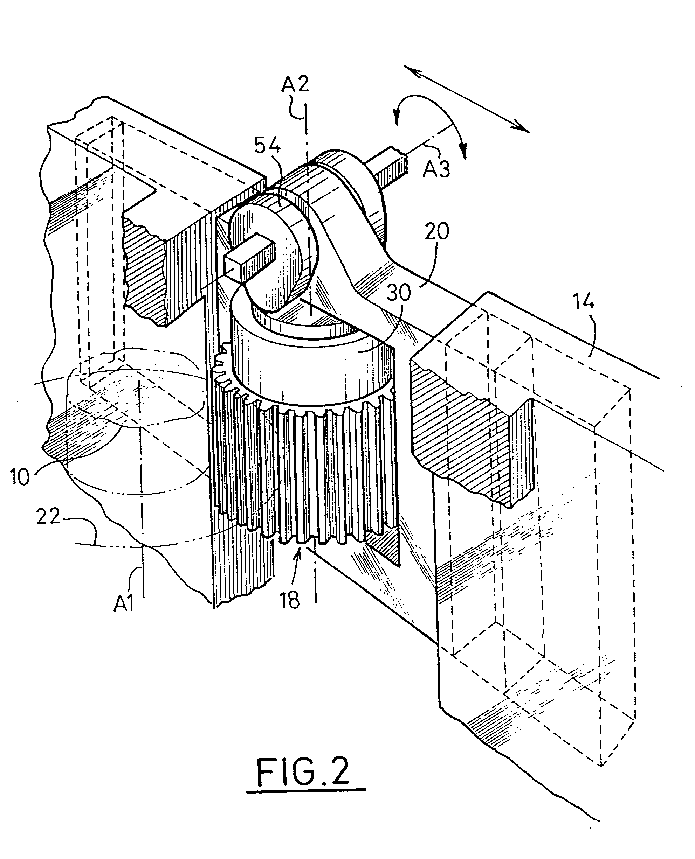

Comme on peut le voir plus particulièrement sur la figure 2, le support 20 est ici réalisé sous la forme d'un cadre qui est monté coulissant dans le support de colonne 14 et qui comporte une fenêtre dans laquelle le pignon 18 est monté à rotation. Le tube de colonne 12 comporte une ouverture 13 qui laisse apparente au moins une partie de la circonférence de la roue dentée 22 pour permettre la coopération du pignon 18 et de la roue 22.

L'embrayage multidisques 30 est contenu à l'intérieur d'une cage cylindrique tubulaire 36 qui est solidaire en rotation du pignon 18 et qui est agencée axialement au-dessus du pignon 18. On peut toutefois envisager de disposer la cage 36 au moins en partie à l'intérieur du pignon 18.

L'embrayage 30 comporte des disques qui sont mobiles avec le pignon 18. Les disques mobiles 38 sont agencés à l'intérieur de la cage 36 et sont immobilisés en rotation par rapport à celle-ci tout en étant mobiles axialement selon l'axe A2 de l'embrayage. A cet effet, les disques mobiles 38 comportent sur leur périphérie externe des ergots 40 qui sont reçus dans des rainures axiales 42 formées dans la surface cylindrique interne 44 de la cage 36.

L'embrayage multidisques 30 comporte également des disques fixes 46 qui sont solidaires en rotation de l'arbre fixe 34 tout en étant mobiles axialement par rapport à celui-ci. A cet effet, les disques fixes 46 comportent une série de doigts 48 qui s'étendent radialement vers l'intérieur depuis leur périphérie interne et qui sont reçus dans des rainures axiales correspondantes 50 formées dans l'arbre 34.

Comme on peut le voir sur les figures, chaque disque mobile 38 est "pris en sandwich" axialement entre deux disques fixes 46, et entre chaque empilement de trois disques ainsi constitué, il est prévu des moyens déformables élastiquement selon la direction axiale qui sont ici réalisés sous la forme de rondelles Belleville 52 superposées.

L'empilement de rondelles et de disques ainsi réalisé est destiné à être serré axialement pour que la force de serrage axiale exercée sur les disques réalise un accouplement par friction des disques mobiles 38 par rapport aux disques fixes 46, ce qui a pour effet d'immobiliser le pignon 18 par rapport au support 20.

Le serrage axial de l'empilement est réalisé, dans l'exemple de réalisation ici représenté, à l'aide d'une came à excentrique 54 qui est montée à rotation autour d'un axe A3 perpendiculaire et concourant avec l'axe A2 de l'embrayage multidisques 30, au-dessus de ce dernier. La came 54 est commandée en rotation sur une course d'environ un quart de tour, par exemple par un moteur électrique (non représenté).

La came 54 agit sur une rondelle plate 56 qui est guidée en coulissement dans la cage cylindrique 36 et qui serre axialement les disques 38, 46 et les rondelles Belleville 52 contre une paroi transversale de fond 58 de la cage 36.

Avantageusement, le dispositif d'immobilisation à embrayage multidisques permet de déterminer un couple maximal d'accouplement entre les disques fixes 38 et les disques mobiles 46. Au-delà de ce couple maximal, il y a une possibilité de rotation du pignon 18 par rapport au support 20 sans pour autant qu'il y ait de rupture d'un quelconque élément si bien que, dès que le couple sur le pignon 18 cesse d'être appliqué ou redevient inférieur à la valeur limite, le pignon 18 est de nouveau immobilisé en rotation.

Cette disposition est particulièrement avantageuse dans le cadre d'un antivol de véhicule automobile.

En effet, un tel dispositif empêche que le dispositif de verrouillage soit détruit lors d'une tentative d'effraction par application d'un couple sur la colonne de direction. On peut ainsi prévoir un glissement de l'embrayage 30 pour un couple appliqué à la colonne supérieur à 100 ou 200 Newton mètres, couple qui rend impossible la conduite du véhicule même s'il n'empêche pas un léger braquage des roues.

Avantageusement, ce dispositif d'immobilisation du pignon 18, et donc de la colonne 10, peut entrer en action quelle que soit la position angulaire du pignon 18 et donc de la colonne.

D'autre part, la libération progressive de l'effort d'immobilisation permet de relâcher la colonne de manière progressive. Ainsi, il n'y a aucun risque de voir le volant tourner brusquement lors du déverrouillage de l'antivol, contrairement à ce qui peut arriver avec une conception classique d'un antivol, par exemple lorsque les roues du véhicule sont soumises à un effort de braquage suite à un appui contre un trottoir.

Le dispositif selon l'invention permet donc un fonctionnement particulièrement silencieux et ne nécessitant aucune intervention du conducteur du véhicule ni au verrouillage, ni au déverrouillage. Il est particulièrement facile de l'intégrer par exemple à un antivol à commande électrique, les moyens d'actionnement du coulisseau 20 et de la came 54 pouvant alors être commandés en séquence, par exemple par une centrale électronique d'antivol.

Dans l'exemple de réalisation décrit précédemment, la trajectoire du pignon 18 est sensiblement parallèle à une tangente à la roue 22, mais cette trajectoire peut aussi être par exemple curviligne.

Ainsi, on a représenté sur les figures 12 et 13 un deuxième mode de réalisation de l'invention dans lequel le support de pignon 60 est monté pivotant autour d'un axe A4 parallèle à l'axe A1 de la colonne de direction 10 et parallèle à l'axe A2 du pignon 18 entre deux positions dans lesquelles le pignon 18 est respectivement en position dégagée et en position engrenée par rapport à la roue dentée 22 de la colonne 10.

Pour assurer la tangence de la trajectoire du pignon 18 par rapport à la roue dentée 22, les axes A1, A2, et A4 de la colonne 10, du pignon 18 et de rotation du support 20 sont agencés dans un même plan lorsque le support 20 est en position d'engrènement du pignon 18 ainsi que cela est représenté en traits forts sur la figure 12.

Le support de pignon 60 est ici réalisé sous la forme d'un boîtier qui délimite un logement interne (non représenté) dans lequel le pignon 18 est monté à rotation autour de son axe A2.

Le logement du support 60 débouche par une fenêtre qui est aménagée dans une face latérale du support 60 et qui permet à une partie de la denture du pignon 18 de dépasser radialement hors du logement pour pouvoir engrener avec la roue dentée 22.

Avantageusement, les moyens 30 d'immobilisation en rotation du pignon 18 sont eux aussi agencés à l'intérieur du logement du support 60, et ils comportent un bouton de commande 62 qui dépasse à l'extérieur du support 60, selon l'axe A2 de rotation du pignon 18, et sur lequel un actionneur (non représenté) est susceptible d'agir selon la direction axiale lorsque le support de pignon 60 est en position d'engrènement du pignon 18. Les moyens d'immobilisation 30 du pignon 18 pourront être les mêmes que ceux décrits plus haut en référence au premier mode de réalisation de l'invention.

Des moyens d'actionnement (non représentés) du support 60 sont prévus pour agir sur une oreille 64 d'orientation radiale du support 60 pour commander ce dernier en rotation autour de l'axe A4.

## Revendications

1. Antivol pour une colonne de direction de véhicule automobile, **caractérisé en ce que** la colonne comporte une roue d'engrenage (22) qui est solidaire d'un arbre de la colonne (10) en rotation autour de leur axe commun (A1), **en ce que** l'antivol comporte un pignon (18), d'axe (A2) parallèle à l'axe (A1) de la colonne (10) et de la roue (22), qui est monté à rotation sur un support mobile (20) susceptible de se déplacer entre une position dégagée du pignon (18) et une position engagée du pignon (18) dans laquelle ce dernier engrène avec la roue (22) de la colonne (10), et **en ce qu'**il est prévu des moyens d'immobilisation (30) du pignon (18) en rotation autour de son axe (A2) par rapport au support (20) pour bloquer l'arbre de la colonne (10) en rotation autour de son axe (A1) lorsque le pignon (18) est en position engrenée.

2. Antivol selon la revendication 1, **caractérisé en ce qu'**il comporte des moyens pour sa mise en oeuvre qui déplacent le pignon (18) de sa position dégagée à sa position engrenée, puis immobilisent le pignon (18) en rotation.

3. Antivol selon la revendication 2, **caractérisé en ce que** la trajectoire du pignon (18) entre ses positions dégagée et engrenée est sensiblement parallèle à une tangente à la roue (22) de la colonne (10) de telle sorte que le pignon (18) arrive en position engrenée en pivotant autour de son axe (A2) du fait de l'arrivée en contact de dents (24, 26) appartenant au pignon (18) et à la roue (22).

4. Antivol selon l'une quelconque des revendications précédentes, **caractérisé en ce que** le support (20) du pignon (18) coulisse selon une direction rectiligne parallèle à la tangente commune à la roue (22) et au pignon (18).

5. Antivol selon l'une quelconque des revendications 1 à 3, **caractérisé en ce que** le support de pignon (20) pivote autour d'un axe parallèle à l'axe (A1) de la colonne (10) et à l'axe (A2) du pignon (18).

6. Antivol selon l'une quelconque des revendications précédentes, **caractérisé en ce que** les dents (24, 26) du pignon (18) et de la roue (22) comportent une tête de dent arrondie pour provoquer un ripage des dents (24, 26) l'une contre l'autre lorsque deux dents (24, 26) du pignon (18) et de la roue (22) arrivent l'une contre l'autre lors de l'engrènement du pignon (18).

7. Antivol selon l'une quelconque des revendications précédentes, **caractérisé en ce que** les moyens d'immobilisation en rotation (30) du pignon (18) comportent des moyens de limitation du couple de blocage du mouvement de rotation du pignon (18).

8. Antivol selon la revendication 7, **caractérisé en ce que** les moyens d'immobilisation du pignon comportent un dispositif à friction (30) dont au moins un élément (38) est relié en rotation au pignon (18) et dont l'autre élément (46) est lié en rotation avec le support (20) du pignon (18).

9. Antivol selon la revendication 8, **caractérisé en ce que** le pignon (18) est monté à rotation sur un arbre (34) solidaire du support (20), **en ce que** les moyens d'immobilisation comportent un embrayage à friction (30) comportant au moins un disque fixe (46) lié en rotation à l'arbre (18) et au support (20), et au moins un disque mobile (38) lié en rotation à une cage cylindrique (36) qui est solidaire en rotation du pignon (18) et dans laquelle sont agencés les disques (38, 46), et **en ce que** certains au moins des disques (36, 48) sont mobiles axialement pour pouvoir être serrés axialement les uns contre les autres.

10. Antivol selon la revendication 9, **caractérisé en ce que** l'embrayage à friction (30) comporte plusieurs disques fixes (46) liés à l'arbre (34), **en ce que** chaque disque fixe (46) est agencé axialement entre deux disques mobiles (38) liés au pignon (18).

11. Antivol selon la revendication 10, **caractérisé en ce qu'**un élément (52) déformable élastiquement selon la direction axiale est interposé entre deux disques mobiles (38) consécutifs.

12. Antivol selon l'une quelconque des revendications 9 à 11, **caractérisé en ce que** les moyens d'immobilisation en rotation (30) du pignon (18) sont commandés par un dispositif à came (54).

## Patentansprüche

1. Lenkschloß für ein Kraftfahrzeug, **dadurch gekennzeichnet, daß** die Lenksäule des Kraftfahrzeuges ein Zahnrad (22) umfaßt, welches mit einer Welle der Lenksäule (10) drehfest um ihre gemeinsame Achse (A1) verbunden ist, daß das Lenkschloß ein Ritzel (18) mit einer parallel zur Achse (A1) der Lenksäule und des Zahnrades (22) angeordneten Achse (A2) umfaßt, welches drehbar an einer beweglichen Haltevorrichtung (20) angeordnet ist, die zwischen einer entkuppelten Stellung des Ritzels (18) und einer eingekuppelten Stellung des Ritzels (18) verlagerbar ist, in welcher Letzteres mit dem Zahnrad (22) der Lenksäule (10) in Eingriff steht, und daß Mittel (30) zur Festsetzung des Ritzels (18) hinsichtlich der Drehung um seine Achse (A2) in bezug auf die Haltevorrichtung (20) vorgesehen sind, um die Welle der Lenksäule (10) hinsichtlich einer Drehung um ihre Achse (A1) zu blockieren, wenn sich das Ritzel (18) in seiner Eingriffsstellung befindet.

2. Lenkschloß nach Anspruch 1, **dadurch gekennzeichnet, daß** das Lenkschloß für seine Verwendung Mittel umfaßt, die das Ritzel (18) von seiner entkuppelten Stellung in seine Eingriffsstellung verlagern, um dann das Ritzel (18) hinsichtlich der Drehung festzusetzen.

3. Lenkschloß nach Anspruch 2, **dadurch gekennzeichnet, daß** der Weg des Ritzels (18) zwischen seiner entkuppelten Stellung und seiner Eingriffsstellung im wesentlichen parallel zu einer Tangente des Zahnrades der Lenksäule (10) verläuft, derart, daß das Ritzel (18) in die Eingriffsstellung durch Drehen um seine Achse (A2) infolge des Kontaktes der Zähne (24, 26) des Ritzels (18) und des Zahnrades (22) gelangt.

4. Lenkschloß nach einem der vorhergehenden Ansprüche, **dadurch gekennzeichnet, daß** die Haltevorrichtung (20) des Ritzels (18) sich entlang einer geraden Führung parallel zu einer gemeinsamen Tangente des Zahnrades (22) und des Ritzels (18) verschiebt.

5. Lenkschloß nach einem der Ansprüche 1 bis 3, **dadurch gekennzeichnet, daß** die Haltevorrichtung (20) des Ritzels (18) um eine zur Achse (A1) der Lenksäule (10) und zur Achse (A2) des Ritzels (18) parallele Achse verschwenkbar angeordnet ist.

6. Lenkschloß nach einem der vorhergehenden Ansprüche, **dadurch gekennzeichnet, daß** die Zähne (24, 26) des Ritzels (18) und des Zahnrades (22) jeweils einen abgerundeten Zahnkopf aufweisen, um ein Abgleiten der Zähne (24, 26) aneinander einzuleiten, wenn die beiden Zähne (24, 26) des Ritzels (18) und des Zahnrades (22) beim Eingriff des Ritzels (18) aufeinander treffen.

7. Lenkschloß nach einem der vorhergehenden Ansprüche, **dadurch gekennzeichnet, daß** die Mittel (30) zum Festsetzen des Ritzels (18) hinsichtlich der Drehung Mittel zur Begrenzung des Bremsmomentes der Rotationsbewegung des Ritzels (18) umfassen.

8. Lenkschloß nach Anspruch 7, **dadurch gekennzeichnet, daß** die Mittel zur Festsetzung des Ritzels eine Bremsvorrichtung (30) umfassen, von denen wenigstens ein Element (38) drehfest mit dem Ritzel (18) und von denen das andere Element (46) drehfest mit der Haltevorrichtung (20) des Ritzels verbunden ist.

9. Lenkschloß nach Anspruch 8, **dadurch gekennzeichnet, daß** das Ritzel (18) drehbar um eine mit der Haltevorrichtung (20) verbundene Welle (34) angeordnet ist, daß die Mittel zur Festsetzung eine Reibkupplung (30) umfassen, die mindestens eine feststehende Scheibe (46) aufweist, welche drehfest an der Welle (18) und an der Haltevorrichtung (20) angeordnet ist, und mindestens eine bewegliche Scheibe (38) aufweist, die drehfest an einem zylindrischen Gehäuse (36) angeordnet ist, das drehfest mit dem Ritzel (18) verbunden ist, und in dem die Scheiben (38, 46) angeordnet sind, und daß mindestens einige der Scheiben (36, 48) axial beweglich sind, um sie axial gegeneinander drücken zu können.

10. Lenkschloß nach Anspruch 9, **dadurch gekennzeichnet, daß** die Reibkupplung (30) mehrere mit der Welle (34) verbundene feststehende Scheiben (46) aufweist, und daß jede feststehende Scheibe (46) axial zwischen zwei beweglichen, mit dem Ritzel (18) verbundenen Scheiben (38) angeordnet ist.

11. Lenkschloß nach Anspruch 10, **dadurch gekennzeichnet, daß** ein in axialer Richtung eleastisch deformierbares Element (52) zwischen zwei aufeinanderfolgenden beweglichen Scheiben (38) eingefügt ist.

12. Lenkschloß nach einem der Ansprüche 9 bis 11, **dadurch gekennzeichnet, daß** die Mittel (30) zur Festsetzung des Ritzels (18) hinsichtlich der Drehung durch eine Exzenter-Einrichtung (54) geregelt werden.

## Claims

1. Antitheft device for a motor vehicle steering column, **characterised in that** the column has a toothed wheel (22) which is fixed to a shaft of the column (10) in rotation about their common axis (A1), **in that** the antitheft device has a pinion (18), with its axis (A2) parallel to the axis (A1) of the column (10) and of the wheel (22), which is mounted for rotation on a movable support (20) able to move between a disengaged position of the pinion (18) and an engaged position of the pinion (18) in which the latter meshes with the wheel (22) on the column (10), and **in that** means are provided for immobilising (30) the pinion (18) in rotation about its axis (A2) with respect to the support (20) in order to lock the shaft of the column (10) in rotation about its axis (A1) when the pinion (18) is in the engaged position.

2. Antitheft device according to Claim 1, **characterised in that** it has means for its use which move the pinion (18) from its disengaged position to its engaged position, and then immobilise the pinion (18) with respect to rotation.

3. Antitheft device according to Claim 2, **characterised in that** the path of the pinion (18) between its disengaged and engaged positions is substantially parallel to a tangent to the wheel (22) on the column (10) so that the pinion (18) arrives in the engaged position by pivoting about its axis (A2) because of the coming into contact of the teeth (24, 26) belonging to the pinion (18) and to the wheel (22).

4. Antitheft device according to any one of the preceding claims, **characterised in that** the support (20) of the pinion (18) slides in a rectilinear direction parallel to the tangent common to the wheel (22) and to the pinion (18).

5. Antitheft device according to any one of Claims 1 to 3, **characterised in that** the pinion support (20) pivots about an axis parallel to the axis (A1) of the column (10) and to the axis (A2) of the pinion (18).

6. Antitheft device according to any one of the preceding claims, **characterised in that** the teeth (24, 26) on the pinion (18) and on the wheel (22) have a rounded tooth head in order to cause scraping of the teeth (24, 26) against each other when two teeth (24, 26) on the pinion (18) and on the wheel (22) arrive against each other when the pinion (18) engages.

7. Antitheft device according to any one of the preceding claims, **characterised in that** the means (30) of immobilising the pinion (18) in rotation include means of limiting the locking torque of the rotation movement of the pinion (18).

8. Antitheft device according to Claim 7, **characterised in that** the means of immobilising the pinion include a friction device (30) on which at least one element (38) is connected in rotation to the pinion (18) and on which the other element (46) is connected in rotation with the support (20) of the pinion (18).

9. Antitheft device according to Claim 18, **characterised in that** the pinion (18) is mounted for rotation on a shaft (34) fixed to the support (20), **in that** the immobilisation means include a friction clutch (30) having at least one fixed disc (46) connected in rotation to the shaft (18) and to the support (20), and at least one movable disc (38) connected in rotation to a cylindrical cage (36) which is fixed in rotation to the pinion (18) and in which the discs (38, 46) are arranged, and **in that** at least some of the discs (36, 48) are able to move axially in order to be able to be clamped axially against each other.

10. Antitheft device according to Claim 9, **characterised in that** the friction clutch (30) has several fixed discs (46) connected to the shaft (34), and **in that** each fixed disc (46) is arranged axially between two movable discs (38) connected to the pinion (18).

11. Antitheft device according to Claim 10, **characterised in that** an element (52) which is elastically deformable in the axial direction is interposed between two consecutive movable discs (38).

12. Antitheft device according to any one of Claims 9 to 11, **characterised in that** the means (30) of immobilising the pinion (18) in rotation are controlled by a cam device (54).
